# EUROPEAN PATENT SPECIFICATION

(11) **EP 2 335 640 B1**
(45) Date of publication and mention of the grant of the patent: **19.07.2017**
(21) Application number: 09180197.7
(22) Date of filing: 21.12.2009
(51) Int. Cl.: A61C 8/00, A61C 9/00

(54) **Use of a jig with dental analogs and models**
Verwendung einer Positionierhilfe mit dentalen Analogen und Modellen
L'usage d'un dispositif de positionnement avec analogues et modèles dentaires

(43) Date of publication of application: 22.06.2011
(60) Divisional application: 16164374.7
(73) Proprietor: Align Technology, Inc., San Jose, CA 95131 (US)
(72) Inventor: Kopelman, Avi, Tenafly, NJ 07670 (US)
(74) Representative: Grünecker Patent- und Rechtsanwälte PartG mbB

(56) References cited:
- DE-U1- 20 309 508
- US-A- 4 240 605

## Description

### FIELD OF THE INVENTION

This invention relates to dental implants, in particular to methods, systems and accessories useful in procedures relating to dental implants.

### BACKGROUND OF THE INVENTION

Dental implants are widely used as artificial substitutes for the root portion of missing teeth, and allow a tooth prosthesis to be securely anchored to the jaw via a permanent abutment mounted to the implant. Endosseous implants generally comprise an externally threaded body, often self-taping into the bone tissues, and further comprise an internal chamber that is configured, typically internally threaded, for receiving and securing therein the anchoring stem of a permanent abutment therein.

Following implantation of an implant in the intra oral cavity and healing of the surrounding tissues, a physical model of the intra oral cavity is produced for facilitating design and manufacture of the permanent abutment and prosthesis or other restoration that is to be eventually mounted onto the implant. In one procedure, an impression abutment is mounted to the implant so that it projects into the intra oral cavity, and an impression is then obtained of the intraoral cavity using well known techniques and impression materials, for example PVS. The impression abutment may be of the pick-up type, to be embedded with the impression material and retained therein after the impression tray is removed. Alternatively the impression tray is removed without the impression abutment attached thereto, but nevertheless having a recess formed therein complementary to the outer shape of the impression abutment, enabling the transfer-type impression abutment to be mounted therein at a later time. Subsequently an analog, corresponding to the particular implant that is implanted in the patient, is attached to the abutment, which is in situ in the impression material, and plaster is poured into the impression tray including the analog to produce a positive plaster model of the intraoral cavity with the analog embedded. The analog, in particular the internal passage thereof which is substantially identical to the internal passage of the implant that is designed to receive, engage and secure the permanent abutment, is in a position and orientation in the plaster model corresponding to the position and orientation of the implant in the patient's intra oral cavity. The dental technician can now attach a permanent abutment, or custom design a permanent abutment to fit the implant, build a coping or bridge framework or prosthesis to fit into the intraoral cavity of the patient.

By way of general background, the following publications relate to implants:
US 6,358,052 discloses a dental implant system and method for effecting a dental restoration using the same. The dental implant system having an implant fixture adapted to be deployed in a bone; an impression coping adapted to be selectively deployed on the implant fixture and in a dental impression; a laboratory analog adapted to be selectively deployed on the impression coping and in a dental cast; a spherical abutment adapted to be selectively deployed on the laboratory analog; and a multiaxis abutment adapted to be adjustably deployed on the spherical abutment; wherein the spherical abutment and the multiaxis abutment are used to generate a cast permanent abutment which may be received by the laboratory analog and the implant fixture.
US 2008/032262 discloses a dental implant system comprising an implant member, an abutment member and a transfer key with cooperatively engaging structures for ensuring proper alignment and orientation of an abutment assembled on the implant member and for preparing an accurate dental impression and mold which represents the implantation site and its relationship to adjacent teeth structures. A dental reconstruction method utilizing the dental implant system of the present invention is also disclosed.
US 2006/183078 discloses a one-piece, screw-receiving, externally-threaded endosseous dental implant that includes a body portion with external threading and, at its proximal end, an unthreaded, cylindrical portion including a retentive groove for engaging a complementary transfer component or comfort cap; a one- or two-piece screw-receiving implant abutment for attachment to a one or two-piece implant, including a retentive groove for engaging a complementary transfer component or comfort cap; and a fixture mount for insertion in a one-piece implant, that can be sectioned with the distal end used to extend the implant height.

A jig assembly for preparing dental impressions for casting is known from US 4, 240,605. It is particularly utilized for positioning or suspending the paraphernalia or tooth die forming member in a fixed position in the negative dental mould.

A support for dental models is known from DE 20 309 508.

### SUMMARY OF THE INVENTION

The term virtual model is used herein synonymously with "numerical entity", "3D model", and other such terms, and relates to a virtual representation in a computer environment of a real object, for example a dentition or at least a part of an intraoral cavity, or of a real (physical) model thereof, for example.

The term "scanning" refer to any procedure directed at obtaining 3D topographic data of a surface, particularly of a dental surface, and thus includes mechanical methods, typically based on 3D probes for example, optical methods, including for example confocal methods, for example as disclosed in WO 00/08415, or indeed any other method.

The term "display" refers to any means or method for delivering a presentation, which may include any information, data, images, sounds, etc, and thus the delivery may be in visual and/or audio form.

The invention provides the use of a jig according to claim 1 and a kit according to claim 9.

The jig is used for maintaining a desired physical spatial disposition between a physical analog and a cavity of a physical dental model at least until the physical analog is affixed in said cavity. The cavity is an analog receiving cavity formed in said model and for configured for enabling the analog to be affixed in the cavity in said spatial disposition such as to provide a desired spatial disposition between the analog and the dental model.

The cavity is typically larger (wider and/or deeper than the part of the analog that needs to be embedded in the physical model providing a fillable clearance gap therebetween, and the analog is ultimately secured in the cavity via a suitable filler material, for example.

According to at least some embodiments, the jig may comprise a strut having a first end configured for being mounted with respect to the dental model at a first spatial disposition with respect thereto, and a second end configured for enabling the physical analog to mounted to the second end at a second spatial disposition with respect thereto, wherein said first end is at a third spatial disposition with respect to said second end, and wherein said first spatial disposition, said second spatial disposition and said third spatial disposition are chosen to provide said desired physical spatial disposition between the physical analog and the cavity when said strut is mounted with respect to the dental model and the physical analog is mounted to said strut.

In at least some embodiments, the jig may additionally or alternatively comprise a spacer member, wherein said strut comprises an elongate arm comprising said first end and said second end at opposed longitudinal ends of said elongate arm, wherein said first end comprises a strut base portion configured for being mounted to the dental model via said spacer member wherein to provide said first spatial disposition between said first end and the dental model.

Said strut base portion may be configured for enabling said spacer member to be mounted to said strut by engagement to the strut base portion. At least one of the strut base portion and said spacer member may comprise a first engagement arrangement to ensure that the spacer member may be mounted to the strut base portion in a spatial disposition with respect thereto that is fixed in six degrees of freedom. For example, the first engagement arrangement may comprise at least two laterally spaced pins projecting from a second spacer end of said spacer member and corresponding complementary wells formed in the strut base portion for receiving each said pin. Other alternative configurations for the first engagement arrangement may of course be provided.

The dental model in at least some of the above embodiments may include a model base portion configured for enabling said spacer member to be mounted to the dental model by engagement to the model base portion. At least one of the model base portion and said spacer member may comprise a second engagement arrangement to ensure that the spacer may be mounted to the model base portion in a spatial disposition with respect thereto that is fixed in six degrees of freedom. For example, said second engagement arrangement may comprise at least two laterally spaced pins projecting from a first spacer end of said spacer member and corresponding complementary wells formed in the model base portion for receiving each said pin. Other alternative configurations for the second engagement arrangement may of course be provided.

In at least some embodiments including at least some of the above embodiments, said spacer comprises a first spacer end and a second spacer end, wherein said first spacer end is configured for being mounted to said first end via said strut base portion in a spatial disposition with respect thereto that is fixed in six degrees of freedom, and wherein said second spacer end is configured for being mounted to the dental model via a model base portion of the dental model in a spatial disposition with respect to the model base portion that is fixed in six degrees of freedom.

The geometric form of the jig, in particular the specific spatial dispositions of the various parts thereof to properly mate with the physical dental model, can be based on the method provided according to the first aspect of the invention.

For example, the jig according to at least one of the above embodiments may be integrally produced from a suitable blank via a material removal operation or integrally produced via a suitable rapid prototyping operation, based on the geometric form previously determined.

The kit comprises:
a physical dental model comprising a model dentition representative of a first real dentition of a patient, and further comprising a cavity configured for accommodating therein via a fillable gap a physical analog in a model spatial disposition with respect to said model dentition corresponding to a real spatial disposition of an implant with respect to said real dentition;
a jig as outlined above and being configured for holding said physical analog in said model spatial disposition with respect to said cavity at least until the physical analog is affixed in said cavity.

The model dentition is generally representative of a set of adjacent real teeth of a first dental arch of a patient, and may comprise a set of model teeth corresponding to a set of real teeth of at least a portion of a first dental arch of a patient, and wherein said cavity is located adjacent at least one said model tooth at a position corresponding to a missing tooth in the real dentition.

The kit may optionally further comprise an auxiliary dental model representative of a second real dentition of at least a portion of a second dental arch of the patient, wherein the second real dentition is occlusally opposed with respect to the first real dentition. The auxiliary dental model may be configured for being mounted with respect to said dental model in an occlusal relationship corresponding to that between said first real dentition and said second real dentition. This may be accomplished by mounting the two models to the spacer, or to a suitable articulator, for example.

### BRIEF DESCRIPTION OF THE DRAWINGS

In order to understand the invention and to see how it may be carried out in practice, examples and embodiments will now be described, by way of non-limiting example only, with reference to the accompanying drawings, in which:
**Fig. 1** is a schematic illustration of a system for use in dental implant procedures.
**Fig. 2** is a schematic illustration of a method for use in dental implant procedures.
**Fig. 3(a)** and **Fig. 3(c)** illustrate in side view and top view, respectively, an implant and impression abutment; **Fig. 3(b)** and **Fig. 3(d)** illustrate in side view and top view,
   respectively, an analog corresponding to the implant of Fig. 3(a) and Fig. 3(c).
**Fig. 4(a)**, **4(b)** and **4(c)** illustrate virtual models respectively of the intraoral cavity, the analog including impression abutment, and of the physical model to be manufactured.
**Fig. 5** illustrates in isometric view a physical model corresponding to the virtual model of Fig. 4(c).
**Fig. 6** illustrates in isometric view a physical model; **Fig. 6(a)** illustrates in cross-sectional
   side view a casting apparatus for casting a jacketed analog for use with the model of Fig. 6.
**Fig. 7** illustrates in isometric view a physical model; **Fig. 7(a)** illustrates in isometric view a virtual model of a jacketed analog corresponding to the model of Fig. 7.
**Fig. 8** illustrates in isometric view a physical model, including a positioning jig for use therewith.
**Fig. 9** illustrates in side view a variation of the jig of Fig. 8.
**Fig. 10** illustrates in side view anr embodiment of the jig.
**Fig. 11** illustrates in isometric view a physical model, including a spacer member of a positioning
   jig for use therewith.
**Fig. 12** illustrates in isometric view the physical model of Fig. 11, including a positioning jig for use therewith.
**Fig. 13** illustrates in isometric view the physical model of Figs. 11 and 12, with the analog fixed in place.
**Fig. 14** illustrates in isometric view the physical model of Fig. 13, including the spacer member of Fig. 11, and an auxiliary dental model of an opposed dentition, in occlusal relationship.
**Fig. 15** illustrates in side view a blank for manufacturing a physical model.

### DETAILED DESCRIPTION OF EMBODIMENTS

According to one aspect of the present invention there is provided a system and method for use in dental implant procedures.

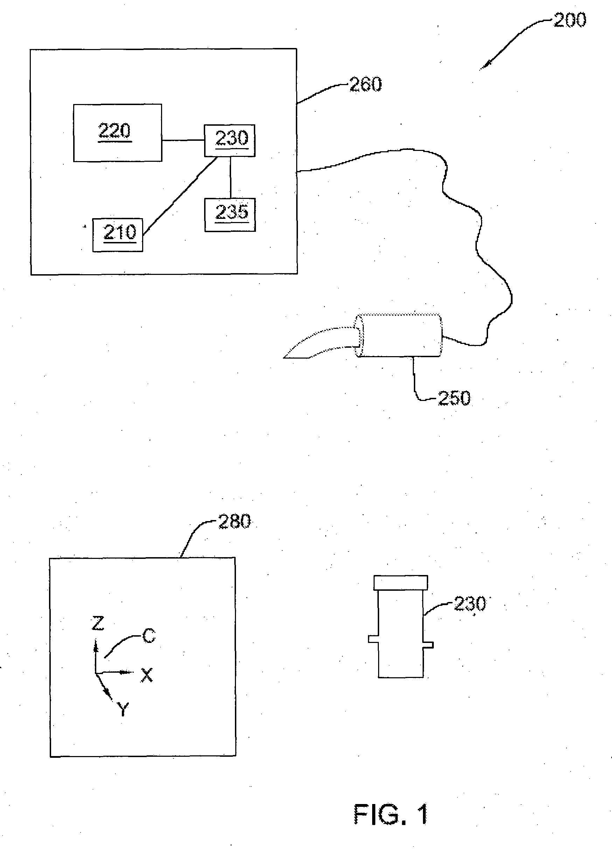

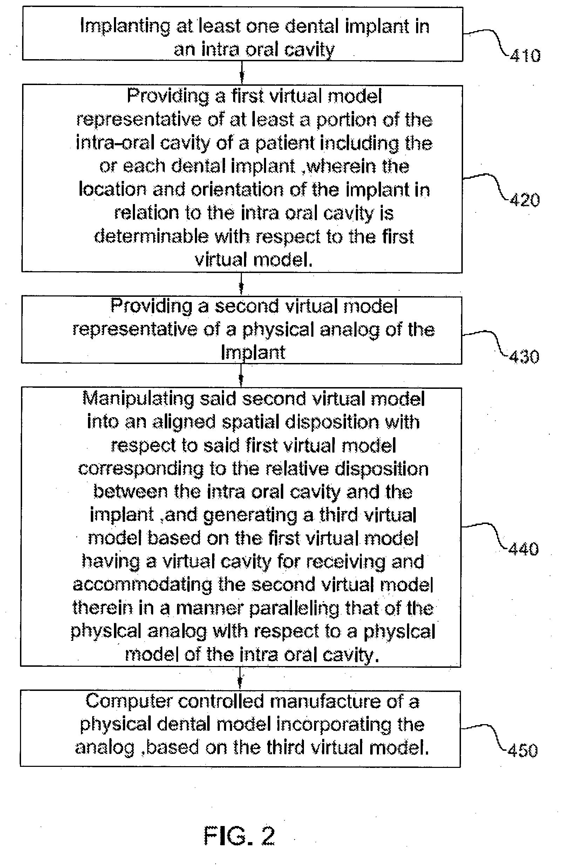

Fig. **2** illustrates a block diagram of a method **400** for use in dental implant procedures, and **Fig. 1****.** illustrates the main elements of a system **200** for carrying out the method.

While the present description is directed to a single implant, it is readily appreciated that the invention is applicable, *mutatis mutandis,* to a plurality of implants that may be implanted in the intra oral cavity of a patient, whether the implants are independent from one another, each being used for a separate prosthesis, or whether at least some of the implants are to be coupled to be used together for a single bridge prosthesis or other multiple tooth prostheses, for example.

The system **200** comprises: a first module, including a scanner **250,** and a microprocessor or any other suitable computer system **260;** a second module comprising a physical analog **230** corresponding to the implant **240** that it is desired to have implanted in the intra oral cavity of a patient; and a manufacturing system **280** for manufacturing a physical model **600** of the intra oral cavity including the analog **230.**

The computer system **260** comprises an input interface or module **210** such as a keyboard, mouse, tablet, and so on, an output device or display means or module **220,** typically a screen or monitor but may additionally or alternatively include a printer, or any other display system, a processing unit or module **230** such as for example a CPU, and a memory **235**.

The scanner **250** is configured for providing surface data of surfaces, in particular hard dental surfaces, other tissue surfaces of the intra oral cavity of a patient, and of the implant **240**, in situ or before implantation, and is also operatively connected to the computer system **260** and interacts therewith. The computer system **260** is suitably programmed for reconstructing such surfaces from the surface data provided to provide a first virtual model **500** of the intraoral cavity. Such a scanner may comprise, for example, a probe for determining three dimensional structure by confocal focusing of an array of light beams, for example as marketed under the name of iTero or as disclosed in WO 00/08415. Alternatively, the required scanning may be accomplished using any suitable scanning apparatus for example comprising a hand held probe. Optionally, color data of the intraoral cavity may also provided together with the 3D data, and thus the first virtual model **500** comprises spatial and color information of the dental surfaces scanned. Examples of such scanners are disclosed in US 2006-0001739, and which is assigned to the present Assignee.

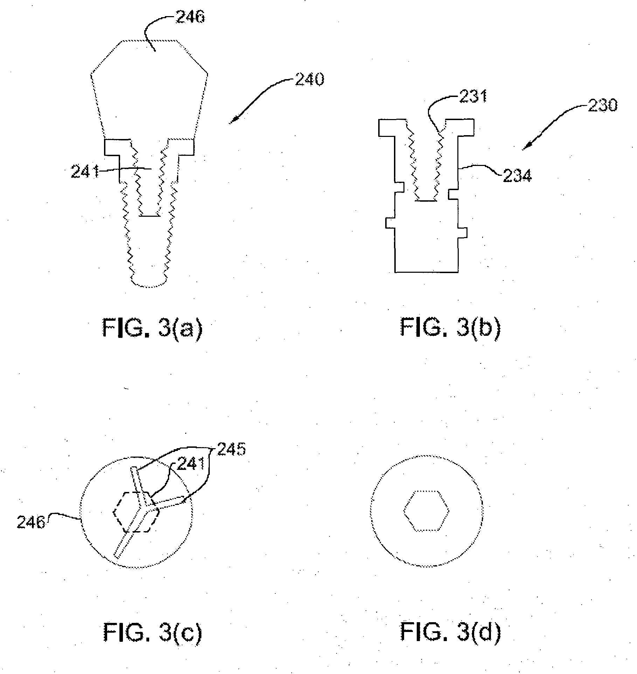

Referring also to Figs. **3**(a) to Fig. **3**(d), the physical analog **230** comprises a housing **234** having an inner passage or chamber **231,** for example including a hexagonal entrance and internally threaded portion, that enables mating with a complementary structure in the permanent abutment, enabling the latter's position with respect to the analog (and thus the physical tooth model) to be dictated in six degrees of freedom. The inner chamber **231** thus corresponds and is nominally identical to the inner chamber **241** of the implant **240.** The external form of housing **234** is configured for being embedded in a physical model **600** of the intraoral cavity.

The manufacturing system **280** comprises a computer controlled manufacturing system configured for manufacturing a physical model from a virtual model, with respect to a machine coordinate system C. In this example, the manufacturing process itself is a material removing process such as CNC milling, the physical model **600** incorporating, or being capable of incorporating, the physical analog **230** in the correct spatial orientation and position with respect to the physical model of intraoral cavity corresponding to the spatial orientation and position of the implant **240** in the patient's intra oral cavity.

Referring again to Fig. **2****,** process **400** broadly includes the following steps:
Step **410 -** implanting at least one implant **240** in an intra oral cavity of a patient.
Step **420 -** providing a first virtual model **500** representative of at least a portion of the intra-oral cavity of a patient including the or each dental implant, wherein the location and orientation of the implant in relation to the intra oral cavity is determinable with respect to the first virtual model.
Step **430 -** providing a second virtual model representative of a physical analog of the implant.
Step **440 -** manipulating said second virtual model into an aligned spatial disposition, i.e. in spatial registry, with respect to said first virtual model corresponding to the relative disposition between the intraoral cavity and the implant, and generating a third virtual model based on the first virtual model having a virtual cavity for receiving and accommodating the second virtual model therein in a manner paralleling that of the physical analog with respect to a physical model of the intra oral cavity.
Step **450 -** computer controlled manufacture of a physical dental model **600** incorporating the analog **230,** based on the third virtual model.

Referring to each step in turn, step **410** comprises implanting at least one implant in an intra oral cavity of a patient, and follows well-established dental procedures in the art, which will not be described in further detail herein.

Step **420** comprises acquiring an accurate **3D** representation, (herein also referred to interchangeably as "three-dimensional model", "**3D** model", "virtual model" and the like) of the required part of the intraoral cavity of the patient,which forms the focus of the particular implant procedure for a particular patient and regarding which it is desired to obtain the **3D** topographical or surface data thereof. The required part may include partial or the full mandibular or maxillary arches, or both arches, and may further include details of the spatial relationship between the two arches in occlusion, and includes the implant in situ in the intra oral cavity.

In any case, this first virtual model **500** may be provided by scanning the intra-oral cavity in-vivo using any suitable equipment for scanning a patient's teeth. Such scanning equipment comprises, in this example, the scanner **250** of system **200,** though in other examples, any other suitable scanner may be used. Alternatively, the **3D** digitized data may be obtained in any other suitable manner, including other suitable intra oral scanning techniques, based on optical methods, direct contact methods or any other means, applied directly to the patient's dentition. Alternatively, X-ray based, CT based, MRI based, or any other type of scanning of the patient's intra-oral cavity may be used.

The **3D** virtual model is created such as to include sufficient **3D** information regarding the implant **240** so that its position with respect to intra oral cavity may be determined in the first virtual model **500**. For this purpose it may be sufficient to retain the healing abutment engaged with the implant **240** during scanning, if the engagement position of the healing abutment with respect to the implant **240** is unique and determinable from viewing or scanning at least the exposed part of the healing abutment in the intraoral cavity. Otherwise before the scanning operation, and in the present example, the healing abutment is removed and replaced with an impression abutment **246** (Fig. **3**(a)) that is shaped, and/or comprises suitable markers or other positional indicators **245** (Fig. **3**(c)) on the exposed part of the impression abutment **246** in the intraoral cavity, that provide information about the position and orientation of the impression abutment **246,** including with respect to the cavity **241** (for example the hexagonal entry configuration in which the permanent abutment is eventually to be seated, in many examples of implants) of the implant **240**.

In alternative examples, a physical model may be provided of the intraoral cavity, for example via an impression of the intraotral cavity and subsequent casting the impression with plaster, including the implant **240** and the impression abutment **246** (or indeed a suitable healing abutment), and the physical model (or the impression) scanned in any suitable manner to provide the first virtual model **500**.

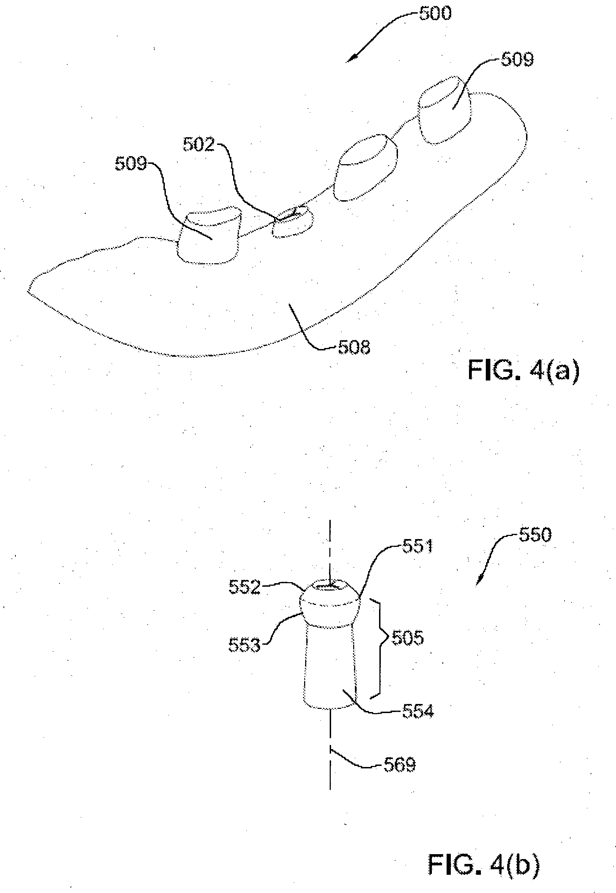

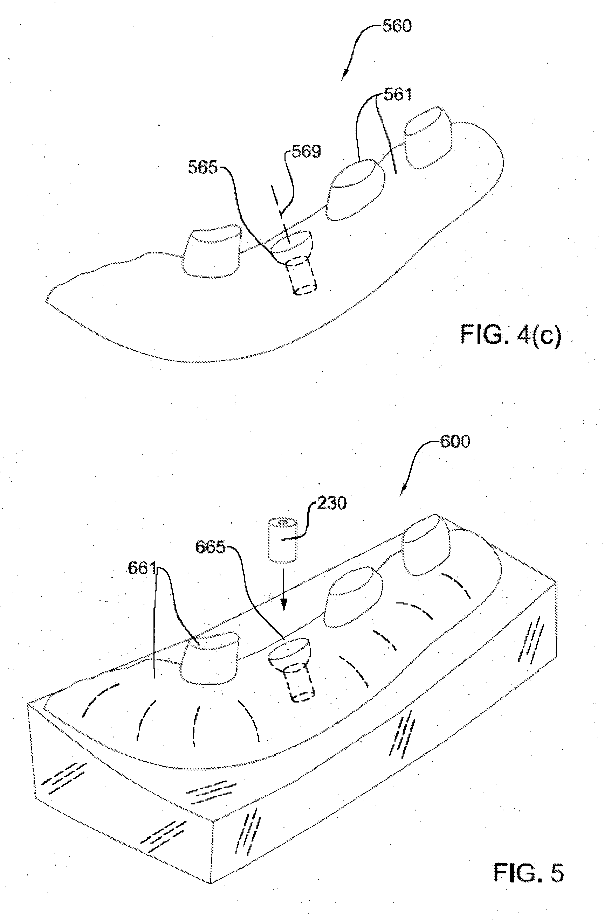

Thus, and referring to Fig. **4**(a), first virtual model **500** comprises portions **509** corresponding to the real teeth, portions **508** corresponding to the gingival tissues, and a portion **502** corresponding to the exposed part of the impression abutment **246**.

In step **430**, and referring to Fig **4**(b), a second virtual model **550** is provided, comprising a first virtual portion **554** representative of the physical analog **230** of the implant **240,** and a second virtual portion **551** representative of the impression abutment **246** coupled thereto.

In the first example, the analog **230** is of constant cross-sectional shape, or alternatively of a tapering cross-sectional shape, such that it is possible to insert the analog in an axial direction into a cavity having a complementary shape. At the same time the cross-section is such (for example oval, asymmetric, polygonal etc) that inserting the analog into a complementary-shaped cavity fixes the position of the analog in the cavity in six degrees of freedom.

In step **440,** the second virtual model **550** is manipulated in the virtual environment of the computer system **260** into an aligned spatial disposition with respect to said first virtual model **500,** in spatial registry therewith, to generate a third virtual model **560,** corresponding to some extent to a virtual combination of said first virtual model and said second virtual model, illustrated in Fig. **4**(c), in which the second virtual model is essentially "subtracted" from the first virtual model.

The first virtual model **500** and the second virtual model **550** are virtually aligned by manipulating the virtual models by means of the computer system **260** such that the portion **502** corresponding to the exposed part of the impression abutment **246** is brought into registry with a corresponding portion **552** of the second virtual model **550**. This may be accomplished in many ways as are known in the art - for example using suitable shape recognition software that compares the shape of one portion at a time of one of the virtual model with different portions of the other virtual model, until a match is found within a particular error threshold. Optionally, the process can be accelerated by user interaction with the computer system 260, wherein the user can identify the general areas of the two virtual models that are common to one another, whereupon the computer system searches for matching the models within the identified areas. Once a match is found, one or both of the models can be rotated and/or translated so as to bring into registry the aligned parts, and thereby aligning the models. Thus aligned, portion **552** (and portion **502**) are effectively removed from the first model **500,** and a surface **565** is added to the first model to generate the third model **560.** Surface **565** comprises the remainder of the first virtual portion **551,** i.e. lower portion **553** (corresponding to the part of the outer surface of the impression abutment **246** that is hidden from view), plus the second virtual portion **554.** Optionally, surface **565** may be scaled in a radial or lateral direction away from the longitudinal axis **569** of the second virtual model for facilitating a friction fit between the physical model **600** and analog **230**.

Virtual model **560** thus comprises an outer virtual surface **561** representative of the dental tissues that are exposed in the intra-oral cavity, and an inner virtual surface **565** representing a cavity for receiving and retaining therein the second virtual model, or at least the part thereof corresponding to the analog, in the same relative position as the implant in the intra oral cavity.

In step **450,** and referring to Fig. **5****,** a physical dental model **600** is manufactured incorporating the analog **230,** based on the third virtual model by the manufacturing system **280**. In this example, a computer controlled material removing manufacturing process, such as for example CNC milling or machining, is used for milling or otherwise machining the physical model **600** from a blank of material, producing an outer model surface **661** corresponding to surface **561** of the third virtual model **560** and representing dental tissues that are exposed in the intra-oral cavity, and producing a cavity **665** having an internal surface corresponding to surface **565,** into which the analog **230** is inserted in a friction fit to assume a position and orientation that is fixed in **6** degrees of freedom with respect to the model **600,** corresponding to the position and orientation of the implant **240** in the intraoral cavity of the patient.

Suitable CNC machining paths for producing the external surface **661** and cavity **665** of the model **600** from a blank are generated from the third virtual model **560** in a manner known in the art.

A feature of CNC controlled manufacturing process of the model **600** according to this and other examples is that the machining instructions for producing both, the external surface **661** and cavity **665** of the model **600,** are derived from the same virtual model **650** and are thus referenced to the same machine coordinate system C. This enables the same CNC controlled manufacturing system to be used for machining the outer part **661** of the model as well as the cavity **665** of the model, either in parallel or in series, in an accurate and consistent manner, and in one machining operation. Further, there is no need for an intervening scanning operation to determine the **3D** shape of the outer surface **661,** and then attempt to align the CNC machining of the cavity thereto, as may be required if the outer surface **661** and cavity **665** are manufactured using different methods or which are not based on the same virtual model. The manufacturing process is thus also quick and efficient.

The aforesaid computer controlled machining process thus provides a high degree of dimensional accuracy at least in terms of the position and alignment of the cavity **665** with respect to the outer surfaces **661,** and thus of analog **230** with respect to the model **600** when mounted therein, as the machining process for both the cavity **665** and surface **661** are based on the same coordinate system.

The physical model **600** thus prepared can assist the dental technician in the design and/or preparation of the permanent abutment, coping, prosthesis and so on, in a manner known in the art.

A system and method according to a second example comprises all the elements and features of the first example as disclosed herein, *mutatis mutandis,* with the following differences. In the second example, the analog may not be suitable for, or is unable to be, press-fitted into a cavity in an axial direction. For example the desired analog may be a commercially available analog that may comprise laterally projecting protrusions designed for anchoring the analog in a plaster model when the model is cast using prior art methods with the analog in its properly aligned place by virtue of an impression abutment fixed in the impression material.

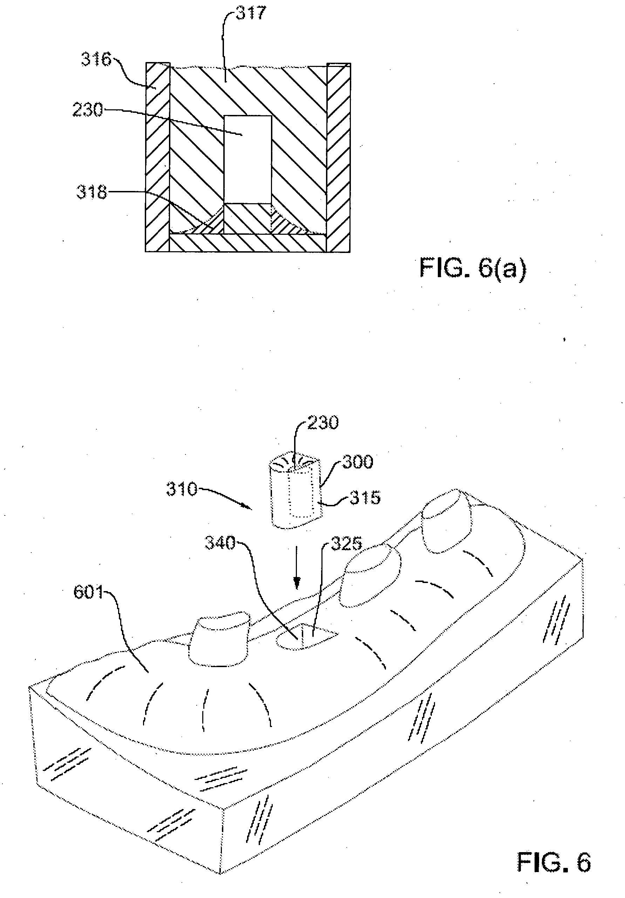

According to the second example, and referring to Fig. **6****,** the analog **230** is embedded in a jacket **300** to form a composite analog **310**. In this example, the jacket **300** is made from a machinable material, which is milled or otherwise machined in situ on the analog **230** to have an external shape that is readily insertable in a suitable direction, for example an axial direction with respect to the analog **230,** in a complementary cavity 320 formed in the physical model, referred to herein by the reference numeral **601**. The method steps of Fig. **2** are applicable to the second example, *mutatis mutandis,* with the main difference that in general at least some of the steps therein relating to the analog **230** and cavity **665**, may be applied, in the second example, to the composite analog **310** and cavity **340** instead, *mutatis mutandis.*

Thus steps **410** and **420** for the second example are substantially the same as for the first example, *mutatis mutandis.*

In step **430,** though, the second virtual model, while representative of the physical analog **230,** is further representative of the jacket **300,** and thus of the composite analog **310**. The shape and relative position of the outer surface **315** of the jacket **300** that is to mate against the internal surface **325** of cavity **340** may be predefined, or may be designed as part of the method of the invention.

According to the first option, the shape and relative position of the outer surface **315** of the jacket **300** that is to mate against the internal surface **325** of cavity **340** may be predefined. The jacket **300** is formed on the analog **230 -** for example the analog **230** is cast or otherwise embedded in a blank of material, and the jacket **300** is machined until a desired form is provided for outer surface **315.** Alternatively, and referring to Fig. 6(a), a cast material **317** may be poured into a precision mold **316** of a predefined internal shape, while analog **230** is being held in a predefined spatial relationship with respect thereto by a jig **318** or the like. In any case, in step **430,** the resulting composite analog **310** is scanned, for example, to accurately determine the surface coordinates thereof, while impression attachment is attached to the analog **230,** thereby providing a first virtual portion representative of the impression abutment, and a second virtual portion, representative of surface **315.** Then, in step **440,** the third virtual model is generated in a manner substantially similar to that of the first example, mutatis mutandis, directed to the first and second virtual portions defined in step **430,** comprising the outer surfaces corresponding to the exposed surface of the intra oral cavity and a virtual cavity which is substantially complementary to the non-exposed part of the first virtual portion and to the second virtual portion obtained in this example. In the manufacturing step **450,** the outer surface and the cavity **340** of the physical model are manufactured in a similar manner to that of the first example, *mutatis mutandis,* and the composite analog **310** can then be affixed into the cavity **340** in a manner such that the analog **230** is aligned with the model **601** in a manner paralleling the position and orientation of the implant **240** in the intra oral cavity.

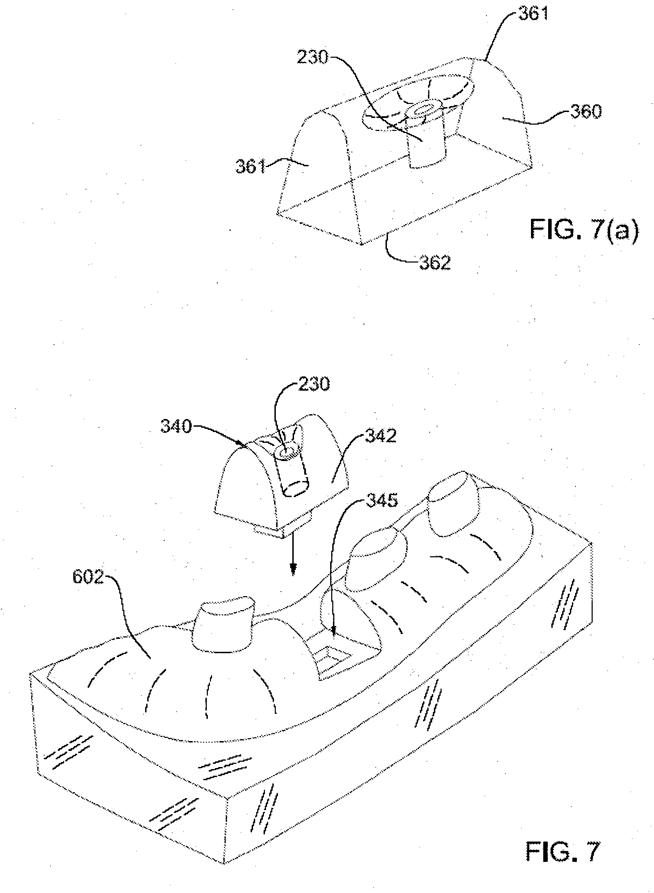

According to the second option, the shape and relative position of the outer surface **315** of the jacket **300** that is to mate against the internal surface **325** of cavity **340** is designed as part of the method. Thus, in step **430,** the second virtual model representative of the analog **230** is provided in a similar manner to that disclosed herein for the first example *mutatis mutandis.* This second virtual model is then modified by adding a suitable external virtual surface, outwardly displaced with respect to the virtual surface in a manner that allows for an insertion path to a complementary virtual recess or cavity provided in the third virtual model. For example, the aforesaid external virtual surface may comprise a generally prismatic form, for example corresponding to that of the external surface **315** illustrated in Fig. **6****.** Alternatively, and referring to Figs 7 and 7(a), for example, the external virtual surface, marked at **360,** may correspond to part of the first virtual model and is representative of an exposed part of the outer surface of the buccal and labial gingival tissues close to the position of the implant **240** in the intra oral cavity, and further include virtual side portions **361** and base **362** to enclose the initial virtual model of the analog in a virtual volume. In step **440,** the third virtual model is generated from the first virtual model by effectively removing a virtual surface corresponding to surface **360** of the second virtual model, and adding virtual surfaces complementary to side portions **361** and base **362** to form a virtual recess or cavity configured for enabling the second virtual model to fit therein. In step **450,** the physical model **602** is manufactured in a similar manner to that in the first example, *mutatis mutandis,* producing a recess or cavity **345** as well as the external surfaces corresponding to parts of the intra oral cavity. Step **450** also comprises manufacturing the composite analog **340,** based on the modified second virtual model generated in step **430,** and this may be done, for example, by casting or otherwise embedding the normally hidden parts of the analog **230** in a blank of material, and the jacket **342** is then CNC machined based the second virtual model, in which the analog is held in a known position with respect to the manufacturing system **280.**

A system and method according to a third example comprises all the elements and features of the first and second examples as disclosed herein, *mutatis mutandis,* with the following differences. In the third example, the analog is not press-fitted in place with respect to the physical model - for example, the analog may not be suitable for, or is unable to be, press-fitted into a cavity in an axial direction.

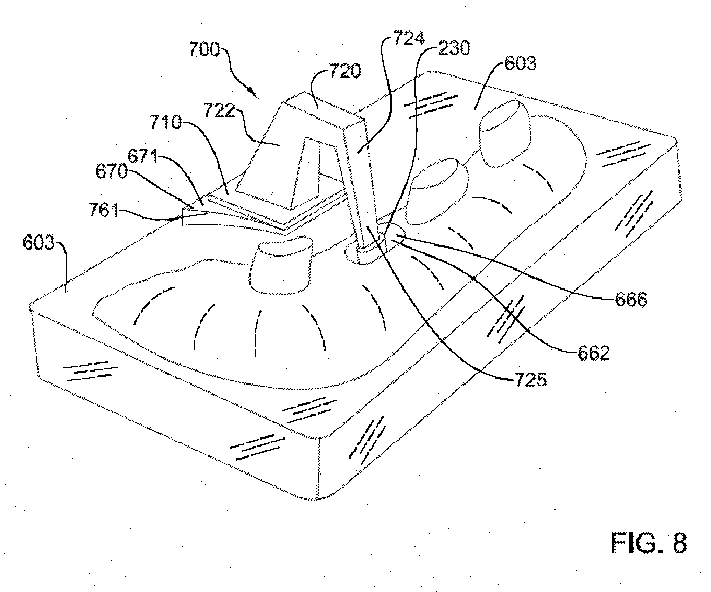

According to the third example, and referring to Fig. **8****,** a physical model **603** of the intra oral cavity is manufactured in a similar manner to that disclosed herein for the first example, *mutatis mutandis,* with two main differences. The first difference is that the machined cavity **666** is significantly larger than required for accommodating the analog **230** in a tight fit, and the cavity may be of any desired shape so long as the analog may be inserted therein, with a clearance **662,** in the position and orientation with the respect to the model **603** that parallels the position and orientation of the implant **240** in the intra oral cavity. For example, in step **440** it may only be necessary to establish the spatial relationship between the second virtual model and the first virtual model, but thereafter the virtual cavity corresponding to cavity **666** may be created by effectively removing a "slice" of the first virtual model that is bounded by the location of the two adjacent teeth in the model. The second difference is that the third virtual model is created to include a virtual representation of an integral mating platform **670,** which is then integrally manufactured with the physical model **603.**

According to another aspect, a jig is also provided for the third example of the system and method, for holding the analog **230** within the cavity **666** in the desired position and orientation therein until a filling and fixing material, for example epoxy resin, is placed in the clearance gap **662** and allowed to set, cementing the analog in place, after which the jig can be disengaged from the analog **230** and from the model **603.**

The jig **700,** according to a first embodiment, comprises a base **710,** and a substantially rigid, inverted U-shaped strut **720,** having one arm **722** rigidly attached to the base **710** and a second arm **724** having a free end **725** onto which an analog **230** may be mounted at the abutment receiving end thereof in a known and unique spatial relationship with respect thereto. There is thus a unique and fixed spatial relationship between the end **725** and the base **710.** The shape of the jig is only illustrative, and any suitable arrangement may be used that has a fixed geometrical relationship between the model-engaging base and the analog engaging end. Furthermore, the mating platform **670** is remote from parts of the model representing dental surfaces, and thus facilitates the cementing procedure for the user as there is a minimum or zero obfuscation of the cavity **666** and analog **230** by the jig.

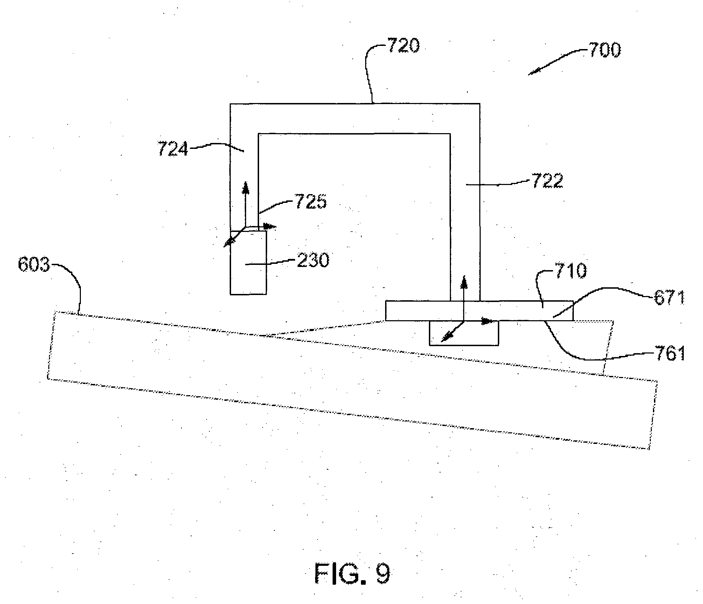

Referring also to Fig. **9****,** the jig **700** is mounted to the model **602** by engaging the mutually abutting surfaces of base **710** and the mating platform **670** in a unique mating position, and is thus engaged in a fixed position therein until removed. In this embodiment, the geometry of the jig **700** is predefined - for example the jig **700** may be a previously manufactured off the shelf item - and the position and orientation of the mating platform **670** with respect to the cavity **666** is designed such that when the jig **700** is properly engaged with the model **603,** with the base **710** firmly seated in position on the mating platform **670,** the end **725** automatically brings the analog **230** attached thereto into its correct position with respect to the cavity **666,** and thus the model **603.** Thus the model **603** may be manufactured having an extended base portion **605,** if necessary, such as to provide the required position and orientation to the base **710** via the mating platform **670.**

The corresponding position and orientation of the mating platform **670** can be calculated in step **440** in a relatively straightforward manner. Having already designed the virtual equivalent of the cavity **666** in step **440,** the required position and orientation of the second virtual model representing the analog **230** is also known. The relative spatial position between the end **725** and the base **710** of the jig **700** is also known, and thus by effectively fixing the end **725** to be in an engagement position, in a virtual sense, with the virtual model of the analog **230,** the corresponding position of the base **710** with respect to the third virtual model is automatically fixed. Accordingly, the shape and position of the virtual equivalent of the mating platform **670,** in particular the abutting surface **671** thereof, is readily defined in the third virtual model, being essentially complementary to the abutting surface **761** of the base **710,** which thus enables the physical model **603** to be manufactured integrally with the mating platform **670** in place.

It is to be noted that rather than a single jig **700,** there may optionally be provided a family of predefined jigs, each having the same general properties of jig **700,** but each having a different fixed geometrical relationship between the respective end **725** and base **710** thereof. Thus, in step **440,** the computer system **260** may determine automatically, or via interaction with the user, which of the particular jigs provides an optimum design for the model **603** for use therewith.

Additionally or alternatively, one or more such jigs may be made from several rigidly connectable modular components, and the user (or computer system **260**) may choose between the available components to build an optimum jig, on the basis of which the platform **670** is designed and manufactured.

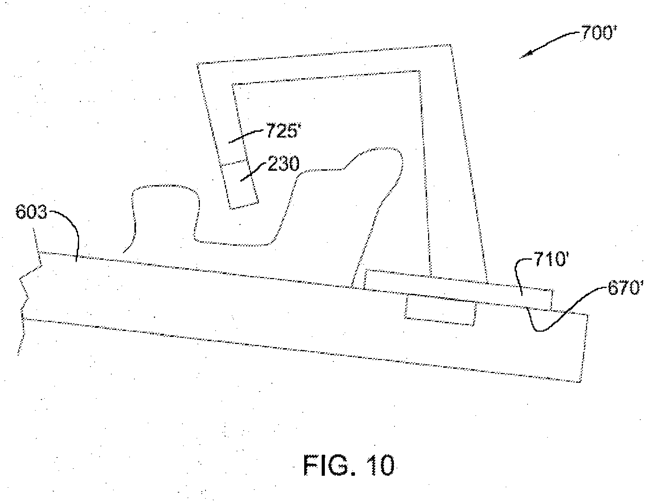

In a variation of the third example, and referring to Fig **10****,** a second embodiment of the jig, designated with the reference numeral **700',** comprises all the elements and features of the first embodiment of the jig as disclosed herein, *mutatis mutandis,* with the following differences. In the second jig embodiment, the jig **700'** may be specially designed and manufactured for use with a particular model **603.** In such a case, the jig **700'** may have the same general properties and characteristics of jig **700,** but the particular geometrical relationship between the end **725'** and base **710'** thereof is optimized in any desired manner, with the constraint that the base **710** is to be mounted at a fixed position and orientation on the model **603** to a standard mating platform **670**'.

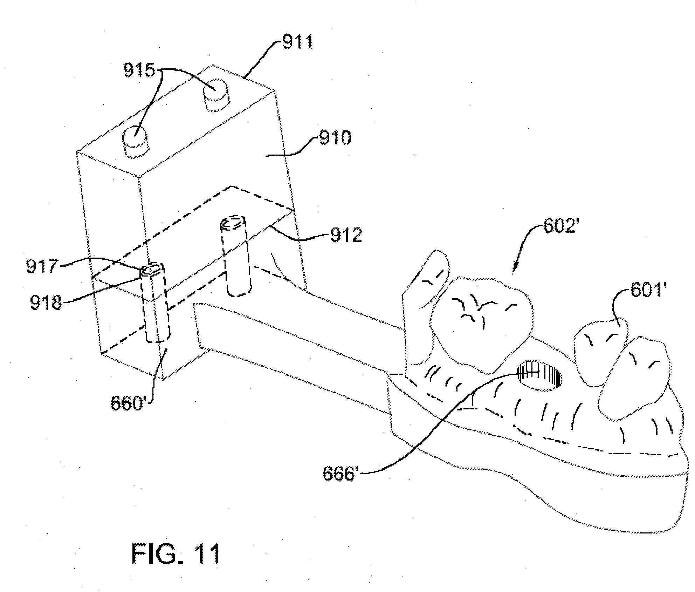

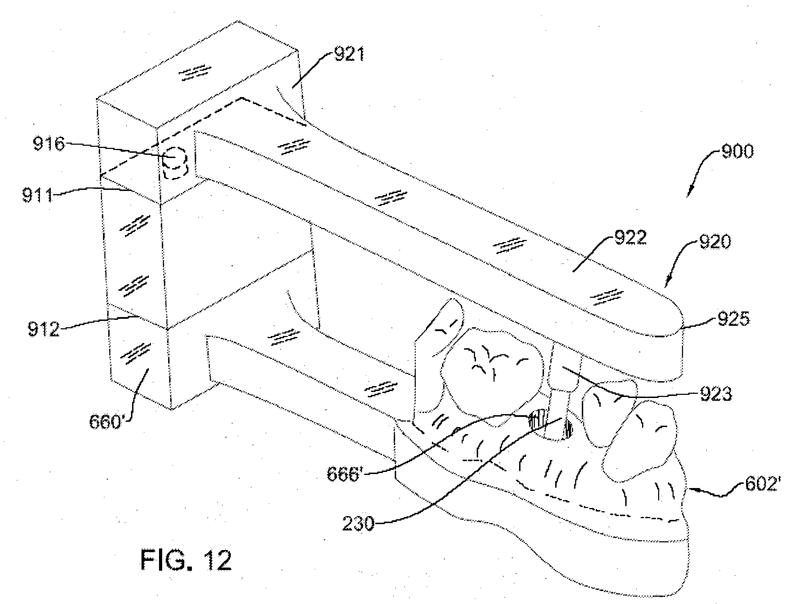

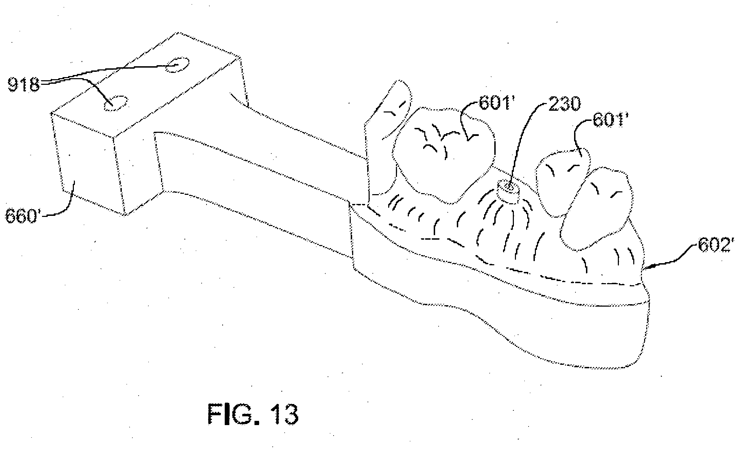

Referring to Figs. 11 to 13, a third embodiment of the jig, designated with the reference numeral **900,** comprises all the elements and features of the first and second embodiments of the jig as disclosed herein, *mutatis mutandis,* with the following differences. In the third jig embodiment, the jig **900** comprises a substantially rigid strut **920,** comprising a spacer member **910** arid an arm **922** rigidly attachable to the spacer member **910** at one end **921** of the arm **922.** At another end **925** of arm **922** a mounting arrangement **923** is provided, onto which an analog **230** may be mounted at the abutment receiving end thereof in a known and unique spatial relationship with respect thereto. There is thus a unique and fixed spatial relationship between the end **925** and mounting arrangement **923,** and the spacer member **910.**

Spacer member **910** comprises two longitudinally opposed free ends **911, 912** thereof, and is reversibly attached to end **921** of arm **922** to form L-shaped strut **920** by an engagement arrangement, including a pair of laterally-spaced pins **915** projecting from end **911** and complementary sockets or apertures **916** formed in the end **921** to receive and retain the pins **915**. The mating faces between the ends **921** and **911** and the pins **915** and apertures **916** effectively fix the relative spatial disposition between the arm **922** and the spacer member **910** in six degrees of freedom. In alternative variations of this embodiment, any other suitable engagement or mounting arrangement may be used to ensure that the arm **922** and spacer member **910** are connected to one another in spatially fixed manner with respect to one another, which is reversible and repeatable.

At the same time, the tooth model, **602'** comprises a base portion 660' onto which jig **900** may be mounted via the spacer member **910,** wherein end **912** is reversibly attached base portion **660'** by another engagement arrangement, including a pair of laterally-spaced pins **917** projecting from end **912** and complementary sockets or apertures **918** formed in base portion **660'** to receive and retain the pins **917**. The mating faces between the end **912** and base portion **660'** and the pins **917** and apertures **918** effectively fix the relative spatial disposition between base portion **660'** and the spacer member **910** in six degrees of freedom. In alternative variations of this embodiment, any other suitable engagement or mounting arrangement may be used to ensure that the base portion **660'** and spacer member **910** are connected to one another in spatially fixed manner with respect to one another, which is reversible and repeatable.

In this embodiment, the geometry of the spacer member **910** is predefined - for example the spacer member **910** may be a previously manufactured off the shelf item - and the position and orientation of the base portion **660'** with respect to the cavity **666'**, and the geometry of the arm **922** and relative position between the ends **921**, **922** thereof, are designed such that when the jig **900** is properly engaged with the model **602'**, with the spacer member **910** firmly seated in position on the base portion **660'**, and the arm **922** firmly engaged to the spacer member **910**, the end **925** automatically brings the analog **230** attached thereto into its correct position with respect to the cavity **666'**, and thus the model **602'.**

For example, the model **602'** may be manufactured having base portion **660'** in a particular standard form and position with respect to the model dentition **601'** (i.e., the parts of the model that have external surfaces representative of the external surfaces of the real teeth), and the form and dimensions of the spacer member 910 can also be standard or chosen from a set of standard sizes/forms.

The corresponding position and orientation of the base portion **660'** can be calculated in step **440** in a relatively straightforward manner. Having already designed the virtual equivalent of the cavity **666'** in step **440,** the required position and orientation of the second virtual model representing the analog **230** is also known. The relative spatial position between the end **925** (and mounting arrangement **923**) and the spacer member **910** of the jig **900** is also known, and thus by effectively fixing the end **925** to be in an engagement position, in a virtual sense, with the virtual model of the analog **230**, the corresponding position of the end **912** of the spacer member **910** with respect to the third virtual model is automatically fixed. Accordingly, the shape and position of the virtual equivalent of the arm **922**, in particular the end **925** and end **921** thereof, may be readily defined in the third virtual model, being essentially such as to position the virtual model of the analog in the desired spatial disposition with respect to the corresponding position of the end **912** of the spacer member **910**.

A suitable machining or other material removal operation may be used for manufacturing the arm **922** from a blank, or alternatively the arm **922** may be formed via a rapid prototyping process. Mounting arrangement **923** may be integrally formed with the arm **922,** or alternatively may be formed separately and fixed in place at end **925** is the required spatial disposition with respect thereto.

Once the analog **230** is held in place with respect to the cavity **666'** via jig **900**, it is cemented in place using any suitable cement, adhesive and/or filler, after which the jig may be removed. Thereafter (as with other examples of the physical dental model), the dental model may be used for designing and fitting a prosthesis to the analog **230,** which facilitates the ultimate engagement of the prosthesis with the respective implant in the intra-oral cavity of the patient. To further aid in this process, it may be desired to mount the model **602'** in an articulator, and thus, the base portion **660'** and the engagement arrangement thereof, in particular the apertures **918,** may be designed in the first place also to be compatible with the mounting arrangement of an articulator, which for example may have mounting pins similar to pins **917**. A physical model of the patient's opposed dentition in occlusal relationship with the teeth that are represented by model 602' can also be mounted to the articulator, and thus the user can study the occlusal relationship between the two dental models and the effect of the prosthesis.

It is to be noted that the jig according to the present invention may be used with any suitable cavity, which can be of any suitable shape and is larger than the part of the physical analog that it is desired to embed therein, such as to provide a clearance gap between this part of the analog and the cavity. Thus, the term "cavity" refers to any well, bore, slot or any other receiving volume created in the physical modelin which the analog may be accommodated and cemented in place by means of suitable filler material applied to the clearance gap.

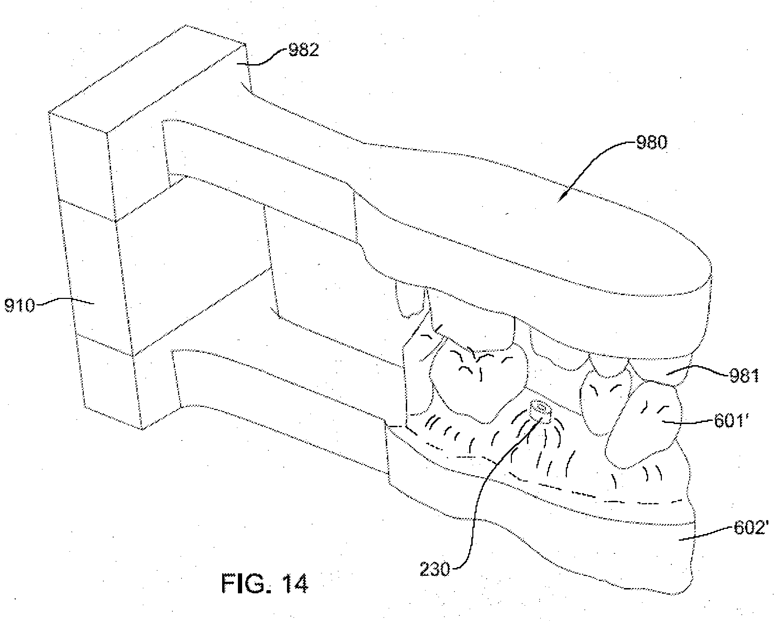

Alternatively, and as illustrated in Fig. 14, a physical model 980 of the patient's dentition of the opposed dental arch in occlusal relationship with the teeth **601'** can be mounted to the spacer member **910** once the arm **922** is removed, and thus the user can study the occlusal relationship between the two dental models and how this is affected by the prosthesis that is mounted to the implant (not shown). For this purpose, the form and size of the spacer member **910**, as well as the size and form of the engaging base portion **982** of the dental model **980** are such that when the dental models **982**, **602'** are mounted to one another via the spacer member **910**, the corresponding teeth models **981**, **601'** are in occlusal relationship.

A system and method according to a fourth example comprises all the elements and features of the first through third examples as disclosed herein, *mutatis mutandis,* with the following differences. In the fourth example, the analog is not assembled into the manufactured physical model, but rather the physical model is integrally manufactured with the analog.

According to the fourth example, steps **410** to **440** can be substantially identical to the same steps as disclosed for the first example, *mutatis mutandis.*

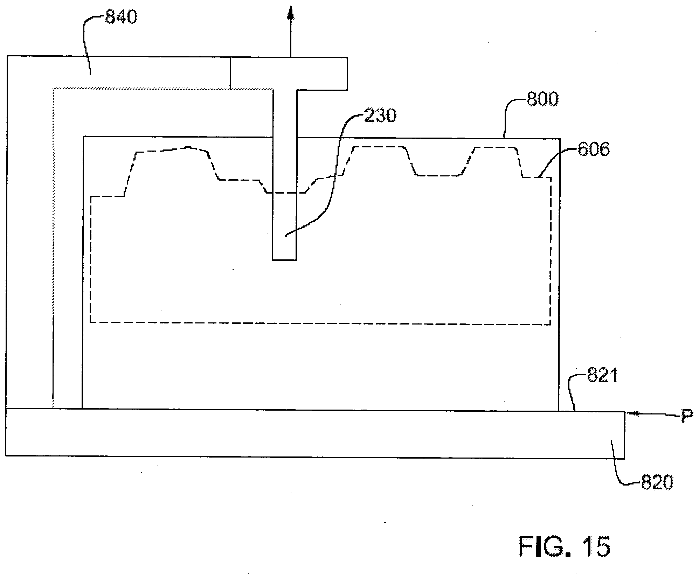

However, and referring to Fig. **15**, the manufacturing step **450** comprises embedding the analog **230** in a blank **800** of material in a position and orientation that enables the physical model **606** to be machined from the blank **800** such that at the end of the machining or material removal process, the analog **230** will effectively end up in the desired position vis-à-vis the finished model **606**. Thus the starting point of the blank **800** may be such that the analog is effectively fully submerged in the blank **800**, in a known position and orientation with respect to a reference plane P of the blank. For example, the analog **230** may be held in a particular, known, position and orientation with respect to a plate **820** via a rigid, though optionally removable jig **840**. Plate **820** defines plane P at the upper surface **821** thereof. The blank **800** can be formed by casting a suitable machinable material over plate **820** (contained by a suitable surrounding wall, not shown) up to a level above the analog **230** sufficient to ensure that the heights of all parts of the eventual model **606** are below this level. For this purpose, step **440** may further comprise the step of constructing a virtual blank surrounding the third virtual model, and comprising a reference plane corresponding to plane P in the corresponding position with respect to the relative position of the second virtual model re the third virtual model, to that of the relative position and orientation between the analog **230** and plate **820,** as provided by the jig **840.** This facilitates design and manufacture of the blank **800.**

Once the blank **800** is ready, it can be positioned in the manufacturing system **280,** calibrated to identify the position and orientation of the analog **230** and plane P with respect to its coordinate system C. For this purpose, plate **820** may optionally be configured for being mountable with respect to the manufacturing system **280** in a predetermined and unique manner relative to the coordinate system C thereof, for example, and thus when mounted for machining in the manufacturing system **280** the position and orientation of the analog **230** with respect to the plate **820,** and thus the manufacturing system's coordinate system is automatically fixed, thereby automatically aligning the blank in the manufacturing system **280,** which can then mill or otherwise machine the blank **800** to produce the model **606** therefrom.

It is to be noted that the computer system **260** in which the virtual models are created and manipulated according to any of the examples does not necessarily need to be located in the same geographical location as the scanner **250** and patient. Thus, while the scanning of the patient is usually done at a dental clinic by the dentist or other dental practitioner, the dental clinic may instead or additionally be linked to one or more dental labs, and possibly also to a dental service center via a communication means or network such as for example the Internet or other suitable communications medium such as an intranet, local access network, public switched telephone network, cable network, satellite communication system, and the like. Additionally or alternatively, the communication means may include postal or courier services, the data being communicated via a transportable medium such as an optical disc, magnetic disc and so on. In any case, once the third virtual model is created, the physical dental model, and other dental procedures not carried out on the actual patient, may be carried out by the dental lab which receives the required data generated by the method **400** via the communications means. The dental service center may be used for manufacturing dental hardware that requires a very high degree of precision, for example inner surfaces of prostheses that are required to match external surfaces of copings, and possibly also the copings themselves.

In method claims that may follow, alphanumeric characters and Roman numerals used to designate claim steps are provided for convenience only and do not imply any particular order of performing the steps.

Finally, it should be noted that the word "comprising" as used throughout the appended claims is to be interpreted to mean "including but not limited to".

## Claims

1. Use of a jig (700; 900) for maintaining a desired physical spatial disposition between a physical analog (230) and a cavity (666; 666') of a physical dental model (603; 602') at least until the physical analog is affixed in said cavity.

2. Use according to claim 1, wherein the jig comprises a strut (720; 920) having a first end configured for being mounted with respect to the dental model at a first spatial disposition with respect thereto, and a second end (725; 925) configured for enabling the physical analog to mounted to the second end at a second spatial disposition with respect thereto, wherein said first end is at a third spatial disposition with respect to said second end, and wherein said first spatial disposition, said second spatial disposition and said third spatial disposition are chosen to provide said desired physical spatial disposition between the physical analog and the cavity when said strut is mounted with respect to the dental model and the physical analog is mounted to said strut.

3. Use according to any one of claim 1 or claim 2, wherein the jig further comprises a spacer member (910), wherein said strut comprises an elongate arm (922) comprising said first end and said second end at opposed longitudinal ends of said elongate arm, wherein said first end comprises a strut base portion configured for being mounted to the dental model via said spacer member wherein to provide said first spatial disposition between said first end and the dental model.

4. Use according to claim 3, wherein said strut base portion is configured for enabling said spacer member to be mounted to said strut by engagement to the strut base portion, in particular, wherein at least one of the strut base portion and said spacer member comprises a first engagement arrangement to ensure that the spacer may be mounted to the strut base portion in a spatial disposition with respect thereto that is fixed in six degrees of freedom.

5. Use according to claim 4, wherein said first engagement arrangement comprises at least two laterally spaced pins (915) projecting from a second spacer end (912) of said spacer member and corresponding complementary wells formed in the strut base portion for receiving each said pin.

6. Use according to any one of claims 3 to 5, wherein the dental model includes a model base portion (660') configured for enabling said spacer member to be mounted to the dental model by engagement to the model base portion.

7. Use according to claim 6, wherein at least one of the model base portion and said spacer member comprises a second engagement arrangement to ensure that the spacer may be mounted to the model base portion in a spatial disposition with respect thereto that is fixed in six degrees of freedom, in particular, wherein said second engagement arrangement comprises at least two laterally spaced pins projecting from a first spacer end of said spacer member and corresponding complementary wells formed in the model base portion for receiving each said pin.

8. Use according to any one of claims 3 to 7, wherein said spacer comprises a first spacer end and a second spacer end, wherein said first spacer end is configured for being mounted to said first end via said strut base portion in a spatial disposition with respect thereto that is fixed in six degrees of freedom, and wherein said second spacer end is configured for being mounted to the dental model via a model base portion of the dental model in a spatial disposition with respect to the model base portion that is fixed in six degrees of freedom.

9. A kit particularly useful for dental implant procedures, comprising:
• a physical dental model (603; 602') comprising a model dentition representative of a first real dentition of a patient, and further comprising a cavity (666; 666') configured for accommodating therein via a fillable gap a physical analog in a model spatial disposition with respect to said model dentition corresponding to a real spatial disposition of an implant with respect to said real dentition;
• a jig (700; 900) configured for maintaining a desired physical spatial disposition between a physical analog and a cavity of a physical dental model at least until the physical analog is affixed in said cavity, wherein the jig is configured for holding said physical analog in said model spatial disposition with respect to said cavity at least until the physical analog is affixed in said cavity.

10. Kit according to claim 9, wherein said model dentition comprises a set of model teeth corresponding to a set of real teeth of at least a portion of a first dental arch of a patient, and wherein said cavity is located adjacent at least one said model tooth at a position corresponding to a missing tooth in the real dentition.

11. Kit according to claim 10, further comprising an auxiliary dental model representative of a second real dentition of at least a portion of a second dental arch of the patient, wherein the second real dentition is occlusally opposed with respect to the first real dentition, in particular, wherein said auxiliary dental model is configured for being mounted with respect to said dental model in an occlusal relationship corresponding to that between said first real dentition and said second real dentition.

12. Kit according to claim 9, wherein the jig comprises a strut having a first end configured for being mounted with respect to the dental model at a first spatial disposition with respect thereto, and a second end configured for enabling, the physical analog to mounted to the second end at a second spatial disposition with respect thereto, wherein said first end is at a third spatial disposition with respect to said second end, and wherein said first spatial disposition, said second spatial disposition and said third spatial disposition are chosen to provide said desired physical spatial disposition between the physical analog and the cavity when said strut is mounted with respect to the dental model and the physical analog is mounted to said strut.

13. Kit according to any one of claim 9 or claim 12, the jig further comprising a spacer member, wherein said strut comprises an elongate arm comprising said first end and said second end at opposed longitudinal ends of said elongate arm, wherein said first end comprises a strut base portion configured for being mounted to the dental model via said spacer member wherein to provide said first spatial disposition between said first end and the dental model.

14. Kit according to claim 13, wherein said strut base portion is configured for enabling said spacer member to be mounted to said strut by engagement to the strut base portion, in particular, wherein at least one of the strut base portion and said spacer member comprises a first engagement arrangement to ensure that the spacer may be mounted to the strut base portion in a spatial disposition with respect thereto that is fixed in six degrees of freedom.

15. Kit according to claim 14, wherein said first engagement arrangement comprises at least two laterally spaced pins projecting from a second spacer end of said spacer member and corresponding complementary wells formed in the strut base portion for receiving each said pin.

16. Kit according to any one of claims 13 to 15, wherein the dental model includes a model base portion configured for enabling said spacer member to be mounted to the dental model by engagement to the model base portion, in particular, wherein at least one of the model base portion and said spacer member comprises a second engagement arrangement to ensure that the spacer may be mounted to the model base portion in a spatial disposition with respect thereto that is fixed in six degrees of freedom.

17. Kit according to claim 16, wherein said second engagement arrangement comprises at least two laterally spaced pins projecting from a first spacer end of said spacer member and corresponding complementary wells formed in the model base portion for receiving each said pin.

18. Kit according to any one of claims 13 to 17, wherein said spacer comprises a first spacer end and a second spacer end, wherein said first spacer end is configured for being mounted to said first end via said strut base portion in a spatial disposition with respect thereto that is fixed in six degrees of freedom, and wherein said second spacer end is configured for being mounted to the dental model via a model base portion of the dental model in a spatial disposition with respect to the model base portion that is fixed in six degrees of freedom.

## Patentansprüche

1. Verwendung einer Spannvorrichtung (700, 900) zur Aufrechterhaltung einer gewünschten physikalischen räumlichen Anordnung zwischen einem physikalischen Gegenstück (230) und einem Hohlraum (666, 666') eines physikalischen Zahnmodells (603, 602'), wenigstens bis das physikalische Gegenstück in dem Hohlraum angebracht ist.

2. Verwendung nach Anspruch 1, wobei die Spannvorrichtung eine Strebe (720, 920) mit einem ersten Ende, das konfiguriert ist, um mit Bezug auf das Zahnmodell in einer ersten räumlichen Anordnung mit Bezug darauf montiert zu werden, und einem zweiten Ende (725, 925) aufweist, das konfiguriert ist, um es dem physikalischen Gegenstück zu ermöglichen, an das zweite Ende in einer zweiten räumlichen Anordnung mit Bezug darauf montiert zu werden, wobei sich das erste Ende in einer dritten räumlichen Anordnung mit Bezug auf das zweite Ende befindet und wobei die erste räumliche Anordnung, die zweite räumliche Anordnung und die dritte räumliche Anordnung ausgesucht werden, um die gewünschte physikalische räumliche Anordnung zwischen dem physikalischen Gegenstück und dem Hohlraum bereitzustellen, wenn die Strebe mit Bezug auf das Zahnmodell montiert wird und das physikalische Gegenstück an der Strebe montiert wird.

3. Verwendung nach einem der Ansprüche 1 oder 2, wobei die Spannvorrichtung des Weiteren ein Abstandselement (910) umfasst, wobei die Strebe einen länglichen Arm (922) umfasst, der das erste Ende und das zweite Ende an entgegengesetzten longitudinalen Enden des länglichen Arm umfasst, wobei das erste Ende ein Streben-Basisteil umfasst, das konfiguriert ist, um an das Zahnmodell über das Abstandselement montiert zu werden, wobei die erste räumliche Anordnung zwischen dem ersten Ende und dem Zahnmodell bereitgestellt wird.

4. Verwendung nach Anspruch 3, wobei das Streben-Basisteil konfiguriert ist, um es dem Abstandselement zu ermöglichen, an der Strebe durch Eingriff in das Streben-Basisteil montiert zu werden, wobei insbesondere wenigstens das Streben-Basisteil oder das Abstandselement eine erste Eingriffsanordnung umfasst, um zu gewährleisten, dass der Abstandshalter an das Streben-Basisteil in einer räumlichen Anordnung mit Bezug darauf montiert werden kann, das in sechs Freiheitsgraden montiert wird.

5. Verwendung nach Anspruch 4, wobei die erste Eingriffsanordnung wenigstens zwei seitlich beabstandete Stifte (915), die von einem zweiten Abstandshalterende (912) des Abstandselements vorstehen, und entsprechende komplementäre Bohrlöcher umfasst, die im Streben-Basisteil zum Aufnehmen von jedem Stift ausgebildet sind.

6. Verwendung nach einem der Ansprüche 3 bis 5, wobei das Zahnmodell ein Modell-Basisteil (660') aufweist, das konfiguriert ist, um es dem Abstandselement zu ermöglichen, an dem Zahnmodell durch Eingriff in das Modell-Basisteil montiert zu werden.

7. Verwendung nach Anspruch 6, wobei wenigstens das Modell-Basisteil oder das Abstandselement eine zweite Eingriffsanordnung umfasst, um zu gewährleisten, dass der Abstandshalter an dem Modell-Basisteil in einer räumlichen Anordnung mit Bezug darauf montiert werden kann, das in sechs Freiheitsgraden fixiert wird, wobei insbesondere die zweite Eingriffsanordnung wenigstens zwei seitlich beabstandete Stifte, die von einem ersten Abstandshalterende des Abstandselements vorstehen, und entsprechende komplementäre Bohrlöcher umfasst, die im Modell-Basisteil zum Aufnehmen von jedem Stift ausgebildet sind.

8. Verwendung nach einem der Ansprüche 3 bis 7, wobei der Abstandshalter ein erstes Abstandshalterende und ein zweites Abstandshalterende umfasst, wobei das erste Abstandshalterende konfiguriert ist, um an das erste Ende über das Streben-Basisteil in einer räumlichen Anordnung mit Bezug darauf montiert zu werden, das in sechs Freiheitsgraden fixiert wird, und wobei das zweite Abstandshalterende konfiguriert ist, um an dem Zahnmodell über ein Modell-Basisteil des Zahnmodells in einer räumlichen Anordnung mit Bezug auf Modell-Basisteil montiert zu werden, das in sechs Freiheitsgraden fixiert wird.

9. Ausrüstung, die besonders für Zahnimplantatverfahren nützlich ist, die umfasst:
- ein physikalisches Zahnmodell (603, 602'), das ein Modellgebiss umfasst, das ein erstes reales Gebiss eines Patienten darstellt und des Weiteren einen Hohlraum (666, 666') umfasst, der konfiguriert ist, um darin über eine füllbare Lücke ein physikalisches Gegenstück in einer räumlichen Modellanordnung mit Bezug auf das Modellgebiss entsprechend einer realen räumlichen Anordnung eines Implantats mit Bezug auf das reale Gebiss aufzunehmen;
- eine Spannvorrichtung (700, 900), die konfiguriert ist, um eine gewünschte physikalische räumliche Anordnung zwischen einem physikalischen Gegenstück und einem Hohlraum eines physikalischen Zahnmodells wenigstens aufrechtzuerhalten, bis das physikalische Gegenstück in dem Hohlraum angebracht ist, wobei die Spannvorrichtung konfiguriert ist, um das physikalische Gegenstück in der räumlichen Modellanordnung mit Bezug auf den Hohlraum wenigstens zu halten, bis das physikalische Gegenstück in dem Hohlraum angebracht ist.

10. Ausrüstung nach Anspruch 9, wobei das Modellgebiss einen Satz von Modellzähnen entsprechend einem Satz von realen Zähnen von wenigstens einem Teil des ersten Zahnbogens eines Patienten umfasst und wobei sich der Hohlraum angrenzend an wenigstens einen Modellzahn an einer Position entsprechend einem fehlenden Zahn in dem realen Gebiss befindet.

11. Ausrüstung nach Anspruch 10, die des Weiteren ein zusätzliches Zahnmodell umfasst, das ein zweites reales Gebiss von wenigstens einem Teil eines zweiten Zahnbogens des Patienten darstellt, wobei das zweite reale Gebiss mit Bezug auf das erste reale Gebiss okklusal entgegengesetzt ist, wobei das zusätzliche Zahnmodell insbesondere konfiguriert ist, um mit Bezug auf das Zahnmodell in einem okklusalen Verhältnis entsprechend dem zwischen dem ersten realen Gebiss und dem zweiten realen Gebiss montiert zu werden.

12. Ausrüstung nach Anspruch 9, wobei die Spannvorrichtung eine Strebe mit einem ersten Ende, das konfiguriert ist, um mit Bezug auf das Zahnmodell in einer ersten räumlichen Anordnung mit Bezug darauf montiert zu werden, und einem zweiten Ende aufweist, das konfiguriert ist, um es dem physikalischen Gegenstück zu ermöglichen, an das zweite Ende in einer zweiten räumlichen Anordnung mit Bezug darauf montiert zu werden, wobei sich das erste Ende in einer dritten räumlichen Anordnung mit Bezug auf das zweite Ende befindet und wobei die erste räumliche Anordnung, die zweite räumliche Anordnung und die dritte räumliche Anordnung ausgesucht werden, um die gewünschte physikalische räumliche Anordnung zwischen dem physikalischen Gegenstück und dem Hohlraum bereitzustellen, wenn die Strebe mit Bezug auf das Zahnmodell montiert wird und das physikalische Gegenstück an der Strebe montiert wird.

13. Ausrüstung nach einem der Ansprüche 9 oder 12, wobei die Spannvorrichtung des Weiteren ein Abstandselement umfasst, wobei die Strebe einen länglichen Arm umfasst, der das erste Ende und das zweite Ende an entgegengesetzten longitudinalen Enden des länglichen Arm umfasst, wobei das erste Ende ein Streben-Basisteil umfasst, das konfiguriert ist, um an das Zahnmodell über das Abstandselement montiert zu werden, wobei die erste räumliche Anordnung zwischen dem ersten Ende und dem Zahnmodell bereitgestellt wird.

14. Ausrüstung nach Anspruch 13, wobei das Streben-Basisteil konfiguriert ist, um es dem Abstandselement zu ermöglichen, an der Strebe durch Eingriff in das Streben-Basisteil montiert zu werden, wobei insbesondere wenigstens das Streben-Basisteil oder das Abstandselement eine erste Eingriffsanordnung umfasst, um zu gewährleisten, dass der Abstandshalter an das Streben-Basisteil in einer räumlichen Anordnung mit Bezug darauf montiert werden kann, das in sechs Freiheitsgraden montiert wird.

15. Ausrüstung nach Anspruch 14, wobei die erste Eingriffsanordnung wenigstens zwei seitlich beabstandete Stifte, die von einem zweiten Abstandshalterende des Abstandselements vorstehen, und entsprechende komplementäre Bohrlöcher umfasst, die im Streben-Basisteil zum Aufnehmen von jedem Stift ausgebildet sind.

16. Ausrüstung nach einem der Ansprüche 13 bis 15, wobei das Zahnmodell ein Modell-Basisteil aufweist, das konfiguriert ist, um es dem Abstandselement zu ermöglichen, an dem Zahnmodell durch Eingriff in das Modell-Basisteil montiert zu werden, wobei insbesondere wenigstens das Modell-Basisteil oder das Abstandselement eine zweite Eingriffsanordnung umfasst, um zu gewährleisten, dass der Abstandshalter an dem Modell-Basisteil in einer räumlichen Anordnung mit Bezug darauf montiert werden kann, das in sechs Freiheitsgraden fixiert wird.

17. Ausrüstung nach Anspruch 16, wobei die zweite Eingriffsanordnung wenigstens zwei seitlich beabstandete Stifte, die von einem ersten Abstandshalterende des Abstandselements vorstehen, und entsprechende komplementäre Bohrlöcher umfasst, die im Modell-Basisteil zum Aufnehmen von jedem Stift ausgebildet sind.

18. Ausrüstung nach einem der Ansprüche 13 bis 17, wobei der Abstandshalter ein erstes Abstandshalterende und ein zweites Abstandshalterende umfasst, wobei das erste Abstandshalterende konfiguriert ist, um an das erste Ende über das Streben-Basisteil in einer räumlichen Anordnung mit Bezug darauf montiert zu werden, das in sechs Freiheitsgraden fixiert wird, und wobei das zweite Abstandshalterende konfiguriert ist, um an dem Zahnmodell über ein Modell-Basisteil des Zahnmodells mit Bezug auf das Modell-Basisteil montiert zu werden, das in sechs Freiheitsgraden fixiert wird.

## Revendications

1. Utilisation d'un gabarit (700 ; 900) pour maintenir une disposition spatiale physique souhaitée entre un analogue d'implant physique (230) et une cavité (666 ; 666') d'un modèle dentaire physique (603 ; 602') au moins jusqu'à ce que l'analogue d'implant physique soit apposé dans ladite cavité.

2. Utilisation selon la revendication 1, le gabarit comprenant une entretoise (720 ; 920) présentant une première extrémité configurée pour être montée par rapport au modèle dentaire à une première disposition spatiale par rapport à celui-ci, et une seconde extrémité (725 ; 925) configurée pour permettre à l'analogue d'implant physique d'être monté au niveau de la seconde extrémité à une seconde disposition spatiale par rapport à celui-ci, où ladite première extrémité se trouve à une troisième disposition spatiale par rapport à ladite seconde extrémité, et où ladite première disposition spatiale, ladite seconde disposition spatiale et ladite troisième disposition spatiale sont choisies pour prévoir ladite disposition spatiale physique souhaitée entre l'analogue d'implant physique et la cavité lorsque ladite entretoise est montée par rapport au modèle dentaire et que l'analogue d'implant physique est monté au niveau de ladite entretoise.

3. Utilisation selon l'une quelconque des revendication 1 ou revendication 2, dans laquelle le gabarit comprend en outre un élément espaceur (910), dans lequel ledit gabarit comprend un bras allongé (922) comprenant ladite première extrémité et ladite seconde extrémité à des extrémités longitudinales opposées dudit bras allongé, où ladite première extrémité comprend une partie de base d'entretoise configurée pour être montée au niveau du modèle dentaire *via* ledit élément espaceur où pour prévoir ladite première disposition spatiale entre ladite première extrémité et le modèle dentaire.

4. Utilisation selon la revendication 3, dans laquelle ladite partie de base d'entretoise est configurée pour permettre audit élément espaceur d'être monté au niveau de ladite entretoise par engagement dans la partie de base d'entretoise, en particulier, où au moins l'un de la partie de base d'entretoise et dudit élément espaceur comprend une première configuration de mise en prise pour garantir que l'élément espaceur peut être monté à la partie de base d'entretoise selon une disposition spatiale par rapport à celui-ci qui est fixé sous six degrés de liberté.

5. Utilisation selon la revendication 4, dans laquelle ladite première configuration d'engagement comprend au moins deux broches latéralement espacées (915) se projetant depuis une seconde extrémité d'espaceur (912) dudit élément espaceur et les puits complémentaires correspondants formés dans la partie de base d'entretoise pour recevoir chacune desdites broches.

6. Utilisation selon l'une quelconque des revendications 3 à 5, dans laquelle le modèle dentaire inclut une partie de base de modèle (660') configurée pour permettre audit élément espaceur d'être monté au niveau du modèle dentaire par engagement avec la partie de base du modèle.

7. Utilisation selon la revendication 6, dans laquelle au moins l'un de la partie de base de modèle et dudit élément espaceur comprend une seconde configuration d'engagement pour garantir que l'élément espaceur peut être monté à la partie de base de modèle selon une disposition spatiale par rapport à celui-ci qui est fixé sous six degrés de liberté, en particulier, où ladite seconde configuration d'engagement comprend au moins deux broches latéralement espacées se projetant depuis une première extrémité d'espaceur dudit élément espaceur et les puits complémentaires correspondants dans la partie de base de modèle pour recevoir chacune desdites broches.

8. Utilisation selon l'une quelconque des revendications 3 à 7, dans laquelle ledit élément espaceur comprend une première extrémité d'espaceur et une seconde extrémité d'espaceur, dans laquelle ladite première extrémité d'espaceur est configurée pour être montée à ladite première extrémité *via* ladite partie de base d'entretoise selon une disposition spatiale par rapport à celle-ci qui est fixée sous six degrés de liberté, et où ladite seconde extrémité d'espaceur est configurée pour être montée au niveau du modèle dentaire *via* une partie de base de modèle du modèle dentaire selon une disposition spatiale par rapport à la partie de base du modèle qui est fixée sous six degrés de liberté.

9. Trousse particulièrement utile pour les procédures d'implant dentaire, comprenant :
• un modèle dentaire physique (603 ; 602') comprenant une dentition modèle représentative d'une première dentition réelle d'un patient, et comprenant en outre une cavité (666 ; 666') configurée pour loger à l'intérieur *via* un espace pouvant être rempli un analogue d'implant physique selon une disposition spatiale de modèle par rapport à ladite dentition modèle correspondant à une disposition spatiale réelle d'un implant par rapport à ladite dentition réelle ;
• un gabarit (700 ; 900) configuré pour maintenir une disposition spatiale physique souhaitée entre un analogue d'implant physique et une cavité d'un modèle dentaire physique au moins jusqu'à ce que l'analogue d'implant physique soit apposé dans ladite cavité, où le gabarit est configuré pour maintenir ledit analogue d'implant physique dans ladite disposition spatiale de modèle par rapport à ladite cavité au moins jusqu'à ce que l'analogue d'implant physique soit apposé dans ladite cavité.

10. Trousse selon la revendication 9, dans laquelle ladite dentition modèle comprend un jeu de dents modèles correspondant à un jeu de dents réelles d'au moins une partie d'une première arcade dentaire d'un patient, et où ladite cavité est localisée de manière adjacente à au moins une desdites dents modèles à une position correspondant à une dent manquante dans la dentition réelle.

11. Trousse selon la revendication 10, comprenant en outre un modèle dentaire auxiliaire représentatif d'une seconde dentition réelle d'au moins une partie d'une seconde arcade dentaire du patient, où la seconde dentition réelle est opposée par occlusion par rapport à la première dentition réelle, en particulier, où ledit modèle dentaire auxiliaire est configuré pour être monté par rapport audit modèle dentaire dans une relation d'occlusion correspondant à celle entre ladite première dentition réelle et ladite seconde dentition réelle.

12. Trousse selon la revendication 9, dans laquelle le gabarit comprend une entretoise ayant une première extrémité configurée pour être montée par rapport au modèle dentaire à une première disposition spatiale par rapport à celui-ci, et une seconde extrémité configurée pour permettre à l'analogue d'implant physique d'être monté au niveau de la seconde extrémité à une seconde disposition spatiale par rapport à celui-ci, où ladite première extrémité se trouve à une troisième disposition spatiale par rapport à ladite seconde extrémité, et où ladite première disposition spatiale, ladite seconde disposition spatiale et ladite troisième disposition spatiale sont choisies pour prévoir ladite disposition spatiale physique souhaitée entre l'analogue d'implant physique et la cavité lorsque ladite entretoise est montée par rapport au modèle dentaire et que l'analogue d'implant physique est monté sur ladite entretoise.

13. Trousse selon l'une quelconque de la revendication 9 ou la revendication 12, le gabarit comprenant en outre un élément espaceur, dans lequel ladite entretoise comprend un bras allongé comprenant ladite première extrémité et ladite seconde extrémité à des extrémités longitudinales opposées dudit bras allongé, où ladite première extrémité comprend une partie de base d'entretoise configurée pour être montée au modèle dentaire *via* ledit élément espaceur en prévoyant ladite première disposition spatiale entre ladite première extrémité et le modèle dentaire.

14. Trousse selon la revendication 13, dans laquelle ladite partie de base d'entretoise est configurée pour permettre audit élément espaceur d'être monté au niveau de ladite entretoise par engagement avec la partie de base d'entretoise, en particulier, où au moins l'un de la partie de base d'entretoise et dudit élément espaceur comprend une première configuration d'engagement pour garantir que l'élément espaceur peut être monté à la partie de base d'entretoise selon une disposition spatiale par rapport à celui-ci qui est fixé sous six degrés de liberté.

15. Trousse selon la revendication 14, dans laquelle ladite première configuration d'engagement comprend au moins deux broches latéralement espacées se projetant depuis une seconde extrémité d'espaceur dudit élément espaceur et les puits complémentaires correspondants formés dans la partie de base d'entretoise pour recevoir chacune desdites broches.

16. Trousse selon l'une quelconque des revendications 13 à 15, dans laquelle le modèle dentaire inclut une partie de base de modèle configurée pour permettre audit élément espaceur d'être monté au modèle dentaire par engagement avec la partie de base de modèle, en particulier, où au moins l'un de la partie de base de modèle et dudit élément espaceur comprend une seconde configuration d'engagement pour garantir que l'élément espaceur peut être monté à la partie de base de modèle selon une disposition spatiale par rapport à celui-ci qui est fixé sous six degrés de liberté.

17. Trousse selon la revendication 16, dans laquelle ladite seconde configuration d'engagement comprend au moins deux broches latéralement espacées se projetant depuis une première extrémité d'espaceur dudit élément espaceur et les puits complémentaires correspondants formés dans la partie de base de modèle pour recevoir chacune desdites broches.

18. Trousse selon l'une quelconque des revendications 13 à 17, dans laquelle ledit élément espaceur comprend une première extrémité d'espaceur et une seconde extrémité d'espaceur, où ladite première extrémité d'espaceur est configurée pour être montée au niveau de ladite première extrémité *via* ladite partie de base d'entretoise selon une disposition spatiale correspondante qui est fixée sous six degrés de liberté, et où ladite seconde extrémité d'espaceur est configurée pour être montée au modèle dentaire *via* une partie de base de modèle du modèle dentaire selon une disposition spatiale par rapport à la partie de base de modèle qui est fixée sous six degrés de liberté.
